# DEMANDE DE BREVET EUROPEEN

(11) **EP 3 040 247 A1**
(43) Date de publication de la demande: **06.07.2016**
(21) Numéro de dépôt: 15200268.9
(22) Date de dépôt: 15.12.2015
(51) Int. Cl.: B60S 1/52

(54) **BRAS D ESSUIE-GLACE ÉQUIPÉ D'UN GICLEUR**

(30) Priorité: 05.01.2015 FR 1550013
(71) Demandeur: Valeo Systèmes d'Essuyage, 78321 Le Mesnil Saint Denis (FR)
(72) Inventeur: CAILLOT, Gérald, 78720 CERNAY LA VILLE (FR)
(74) Mandataire: Callu Danseux, Violaine

(57) **Abrégé**

Bras (14) d'entraînement d'un balai (12) d'essuie-glace de véhicule, en particulier automobile, comportant une pièce terminale (28) de fixation au balai d'essuie-glace, le bras comportant en outre un gicleur (40) de fluide, tel que d'un liquide lave-glace. Le gicleur étant monté pivotant autour d'un axe de pivotement qui est directement fixé ou relié à ladite pièce terminale, et en ce que ledit gicleur comprend des moyens configurés pour coopérer avec ledit balai pour provoquer un pivotement du gicleur autour dudit axe.

## Description

La présente invention concerne un bras d'essuie-glace de véhicule, en particulier automobile, ce bras étant du type comprenant une pièce terminale portant un gicleur de fluide, tel que d'un liquide lave-glace.

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames d'essuyage réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame d'essuyage en plusieurs endroits discrets en lui conférant un cintrage lui permettant d'épouser l'éventuelle courbure du pare-brise, soit, dans une version plus récente dénommée "*flat blade*" (pour "lame plate"), d'un ensemble semi-rigide qui maintient la lame d'essuyage sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de fixation comportant un connecteur et un adaptateur. Le connecteur est une pièce qui est fixée directement sur la lame d'essuyage ou directement sur la lame plate alors que l'adaptateur est une pièce intermédiaire qui permet la liaison et la fixation du connecteur sur le bras d'entraînement. Ces deux pièces sont reliées l'une à l'autre par un axe transversal d'articulation qui autorise leur rotation relative, dans un plan perpendiculaire au pare-brise et passant par le bras. L'adaptateur est en outre configuré pour être engagé dans une tête ou pièce terminale en forme de chape du bras d'entraînement.

Les essuie-glaces peuvent comprendre des équipements tels que des moyens de projection de liquide lave-glace sur le pare-brise. Ces moyens de projection peuvent être situés sur le capot, sur la grille de baie de pare-brise ou, dans une version plus récente, sur les essuie-glaces. Il est par exemple connu de prévoir de tels moyens de projection sur les balais d'essuie-glace voire sur leurs bras d'entraînement. Dans ce cas, le liquide lave-glace est acheminé jusqu'aux moyens de projection par des conduites fixées au bras et reliées à une pompe et à un réservoir logés en général sous le capot du véhicule.

Dans la technique actuelle, lorsque des moyens de projection sont prévus sur un bras d'essuie-glace, ils sont solidaires de ce bras. Les moyens de projection projettent du liquide dans des directions qui restent les mêmes quelle que soit la position du balai vis-à-vis du bras, ce qui est problématique. En effet, ces directions qui sont par exemple optimisées pour bien mouiller le pare-brise lorsque le balai est au milieu du pare-brise ne sont plus optimales lorsque le balai est sur les côtés du pare-brise, ce qui engendre une surconsommation de liquide lave-glace et un mauvais nettoyage du pare-brise.

La présente invention propose un perfectionnement à cette technologie, qui est simple, efficace et économique.

La présente invention concerne un bras d'entraînement d'un balai d'essuie-glace de véhicule, en particulier automobile, comportant une pièce terminale de fixation au balai d'essuie-glace, le bras comportant en outre un gicleur de fluide, tel que d'un liquide lave-glace, caractérisé en ce que le gicleur est monté pivotant autour d'un axe de pivotement qui est directement fixé ou relié à ladite pièce terminale, et en ce que ledit gicleur comprend des moyens configurés pour coopérer avec ledit balai pour provoquer un pivotement du gicleur autour dudit axe.

Selon l'invention, le gicleur est monté pivotant sur le bras et c'est le balai qui provoque son pivotement vis-à-vis du bras. Le gicleur est avantageusement monté directement sur la pièce terminale ce qui évite l'utilisation coûteuse et complexe d'une pièce intermédiaire de raccordement. Le problème précité de la technique antérieure est en outre évité puisque le gicleur peut maintenant suivre les pivotements du balai lors de ses déplacements sur le pare-brise du véhicule. Ainsi, les directions des projections de liquide peuvent être optimisées pour mouiller efficacement une majeure partie du pare-brise.

Le bras selon l'invention peut comprendre une ou plusieurs des caractéristiques suivantes, prises isolément les unes des autres ou en combinaison les unes avec les autres :
- ledit axe de pivotement s'étend dans une direction sensiblement transversale par rapport à un axe longitudinal ou d'allongement du bras ou de sa pièce terminale,
- ledit axe de pivotement est sensiblement parallèle à un axe d'articulation du balai au bras,
- ledit axe de pivotement est sensiblement aligné sur ledit axe d'articulation du balai au bras.
- ledit axe de pivotement comprend une tige de forme allongée dont une extrémité longitudinale est fixée ou reliée à la pièce terminale,
- ladite tige a une forme sensiblement cylindrique ou parallélépipédique,
- ladite tige est formée d'une seule pièce avec la pièce terminale,
- ladite tige est réalisée par découpe et pliage d'une paroi de ladite pièce terminale,
- un doigt sensiblement cylindrique est monté sur ladite tige, ce doigt comportant par exemple un alésage longitudinal dans lequel est engagée la tige et qui a en section une forme sensiblement complémentaire de celle de la tige,
- le gicleur est monté directement sur la tige ou sur le doigt monté sur la tige,
- lesdits moyens sont configurés pour coopérer avec un élément dudit balai, tel qu'un connecteur, une vertèbre de rigidification, ou un corps longitudinal,
- le bras porte deux gicleurs, de préférence indépendants,
- la pièce terminale porte deux tiges de pivotement de deux gicleurs,
- les tiges sont coaxiales,
- le gicleur est alimenté par deux tuyaux,
- le gicleur comprend des moyens de projection d'un côté du bras (ou du balai) ou des deux côtés du bras (ou du balai) de manière simultanée ou alternée, et
- le gicleur comprend un élément thermistance PTC.

La présente invention concerne encore un essuie-glace de véhicule, en particulier automobile, comportant un balai d'essuie-glace et un bras selon l'une des revendications précédentes, le balai comportant un corps longitudinal, une lame d'essuyage, au moins une vertèbre de rigidification, et un système de fixation et d'articulation du balai au bras, autour d'un axe transversal, caractérisé en ce que lesdits moyens du gicleur sont configurés pour coopérer avec le balai de sorte que le gicleur pivote autour dudit axe de pivotement et suive les déplacements du balai en pivotement autour dudit axe transversal.

Avantageusement, lesdits moyens coopèrent avec un élément dudit balai, tel que ladite au moins une vertèbre de rigidification, ledit corps longitudinal, ou un connecteur dudit système de fixation.

Ledit élément du balai comprend une patte, par exemple de forme générale en L, dont une extrémité porte un doigt configuré pour coopérer, par exemple par engagement, avec lesdits moyens du gicleur. En variante, ledit élément du balai comprend une plaque d'appui du gicleur ou des moyens du gicleur. En variante, ledit élément du balai pourrait comprendre une rainure en T configurée pour recevoir lesdits moyens du gicleur, qui auraient une forme sensiblement complémentaire (ici en T). L'inverse est également envisageable.

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un essuie-glace,
- la figure 2 est une vue schématique en perspective et à plus grande échelle de la pièce terminale du bras de l'essuie-glace de la figure 1,
- les figures 3a à 3d sont des vues schématiques partielles en perspective d'un essuie-glace selon l'invention, et illustrent des étapes de montage de cet essuie-glace,
- la figure 4 est une autre vue schématique partielle en perspective de l'essuie-glace des figures 3a-3d, avec une coupe longitudinale du gicleur,
- la figure 5 est une vue schématique partielle en perspective d'un bras d'essuie-glace selon une variante de réalisation de l'invention,
- les figures 6a à 6d sont des vues schématiques partielles en perspective d'une autre variante de réalisation de l'essuie-glace selon l'invention, et illustrent des étapes de montage de cet essuie-glace, et
- les figures 7 à 9 sont des vues schématiques partielles en perspective d'un bras d'essuie-glace selon d'autres variantes de réalisation de l'invention.

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure ou intérieure s'apprécient par rapport au point de fixation du balai sur le bras, la dénomination intérieure correspondant à la partie où le bras et un demi-balai s'étendent, ou par rapport au point de fixation du bras au véhicule. Les directions référencées comme supérieures ou inférieures correspondent à des orientations perpendiculaires au plan de rotation du balai d'essuie-glace, la dénomination inférieure contenant le plan du pare-brise. Enfin, la dénomination horizontale fait référence à un plan ou autre sensiblement parallèle au plan du pare-brise, et la dénomination verticale faire référence à un plan ou autre sensiblement perpendiculaire au plan du pare-brise.

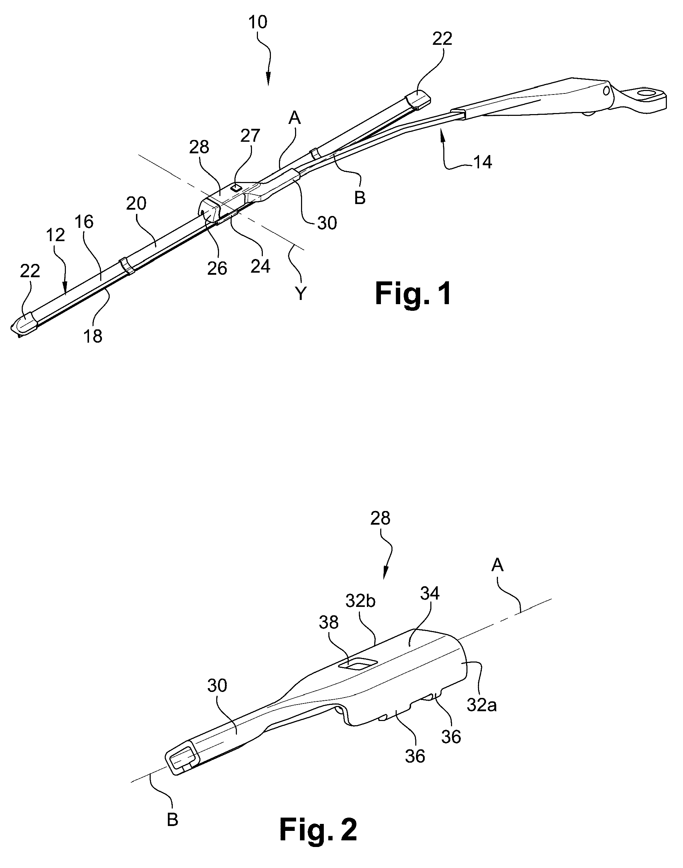

Il est illustré à la figure 1 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal du balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un bouton poussoir 27 porté par l'adaptateur.

Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une tête ou pièce terminale 28 du bras qui peut être formée d'une seule pièce avec le bras ou rapportée et fixée sur celui-ci.

Dans l'exemple représenté, la pièce terminale 28 du bras, mieux visible en figure 2, forme une chape à section transversale sensiblement en U.

La pièce terminale 28 a une forme allongée dont l'axe d'allongement A est en général sensiblement parallèle à l'axe d'allongement ou longitudinal du balai 12. La pièce terminale 28 comprend une partie 30 de liaison au reste du bras 14, par exemple par sertissage. Cette partie 30 a une forme générale allongée et s'étend le long d'un axe B sensiblement parallèle à l'axe A et à distance de cet axe, comme cela est visible aux figures 1 et 2. La partie 30 est reliée à une extrémité arrière ou intérieure de du reste de la pièce terminale 28.

La pièce terminale 28 comprend deux parois longitudinales latérales 32a, 32b dont les bords longitudinaux supérieurs sont reliés entre eux par une paroi transversale supérieure 34. Les parois 32a, 32b, 34 délimitent entre elles un espace de logement de l'adaptateur 26. Les parois 32a, 32b comprennent au niveau de leurs bords longitudinaux inférieurs des moyens 36, tels que des crochets, de retenue de l'adaptateur 26 dans l'espace précité.

La paroi supérieure 34 comprend une ouverture 38 traversante de forme complémentaire du bouton poussoir 27. En position de montage, le bouton poussoir 27 est logé dans cette ouverture 38 et peut traverser cette dernière de façon à être en saillie sur la face supérieure de la paroi 34. Le montage du bouton poussoir 27 dans l'ouverture 38 se fait par simple engagement ou emboîtement.

Selon l'invention, le bras 14, et en particulier sa pièce terminale 28, est équipé d'un gicleur de fluide, tel que d'un liquide lave-glace. Le gicleur est monté pivotant directement sur la pièce terminale 28 du bras 14 et coopère avec le balai 12 pour suivre ses déplacements autour de l'axe Y.

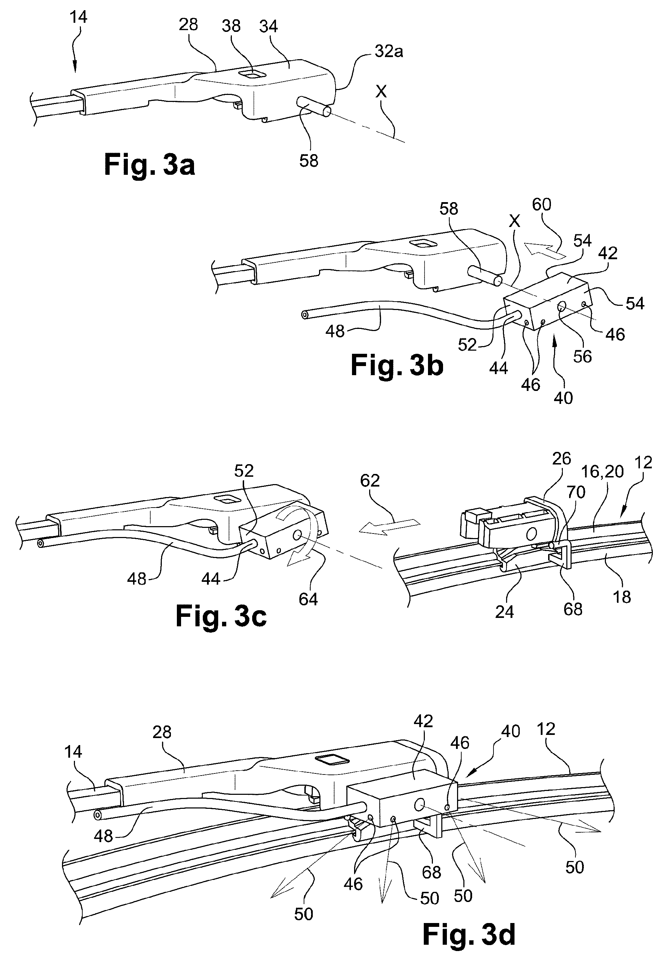

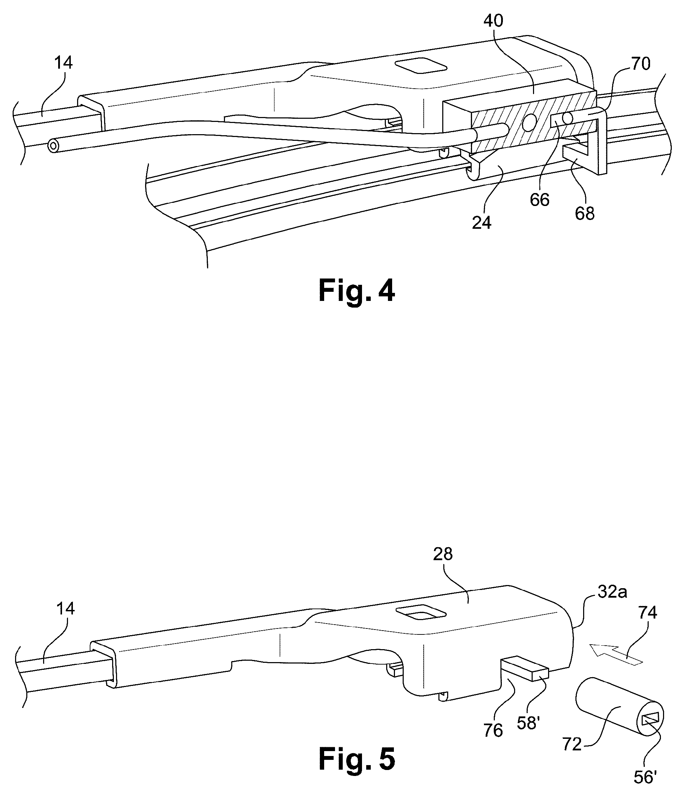

Les figures 3a à 3d et 4 représentent un premier mode de réalisation de l'invention.

Le gicleur 40 peut être réalisé dans un matériau quelconque et par exemple en matériau plastique. Il comprend un corps 42 de forme générale parallélépipédique par exemple, et une canule de raccordement 44. Le corps 42 comprend au moins un orifice 46 de pulvérisation de liquide lave-glace, ici au nombre de quatre. Les orifices 46 sont reliés à la canule 44 par des conduits internes qui ne sont pas visibles. La canule 44 comprend en général un embout d'extrémité mâle destiné à être engagé dans une extrémité d'un tuyau 48 flexible dont l'autre extrémité est raccordée à une pompe et à un réservoir de liquide lave-glace du véhicule équipé de l'essuie-glace. Le tuyau 48 s'étend en partie le long du bras 14 et peut être fixé à ce dernier par des moyens appropriés.

Le gicleur 40 peut aussi comporter un ou des clapets anti-retour, ainsi que des moyens de chauffage, tels que des fils chauffants alimentés par exemple par des fils électriques portés par le tuyau 48.

Les orifices 46 sont ici situés sur au moins une face du corps 42 du gicleur 40. Le corps du gicleur 40 peut toutefois comprendre des orifices 46 sur deux ou trois faces du gicleur, comme cela est visible en figure 3d. Cela permet de pulvériser du liquide lave-glace dans plusieurs directions 50 distinctes et donc de définir des zones distinctes d'impact du liquide sur le pare-brise du véhicule.

Dans l'exemple représenté, le gicleur 40 comprend une face supérieure, une face inférieure, une face avant ou extérieure, une face arrière ou intérieure 52, et deux faces latérales 54. Les faces inférieure, supérieure et latérales sont sensiblement parallèles à l'axe longitudinal du balai et du bras et les faces avant et arrière sont sensiblement perpendiculaires à cet axe longitudinal et donc sensiblement parallèle à l'axe Y précité.

La canule 44 s'étend depuis la face 52 du gicleur. Le gicleur 40 comprend un orifice transversal 56 de logement d'une tige de pivotement 58, qui débouche sur les deux faces latérales 54. L'orifice 56 a en section une forme circulaire sensiblement complémentaire de celle de la tige 28.

La tige 58 est sensiblement cylindrique et de forme allongée. Elle s'étend en direction transversale depuis la paroi latérale 32a de la pièce terminale 28, sensiblement depuis le milieu de cette paroi latérale. Une extrémité de la tige 58 est reliée à la paroi 32a et l'autre extrémité est libre. La tige 58 peut être rapportée et fixée sur la pièce terminale 28 par toute technique appropriée et par exemple par collage, vissage, soudage, brasage, etc. Elle pourrait éventuellement être réalisée de fonderie avec la pièce terminale 28, ou bien également par emboutissage, comme c'est déjà le cas pour la pièce terminale 28 (chape). Elle est de préférence réalisée en métal.

La tige 58 définit un axe X de pivotement du gicleur 40, qui est de préférence parallèle à l'axe Y et plus préférentiellement alignée sur l'axe Y. La tige 58 est configurée pour être engagée dans l'orifice 56 du gicleur de façon à ce qu'il puisse pivoter autour de la tige, c'est-à-dire autour de l'axe X/Y.

Le gicleur 40 comprend en outre des moyens qui sont configurés pour coopérer avec le balai 12 afin de provoquer un pivotement du gicleur vis-à-vis du bras 14 en fonctionnement. Dans l'exemple représenté en figure 4 notamment, le gicleur 40 comprend un logement 66 qui coopère avec une patte 68 portée par le balai pour permettre ce pivotement.

Dans l'exemple représenté, la patte 68 comprend une partie de forme générale en L qui s'étend dans un plan sensiblement transversal. Toute solution comportant des formes complémentaires entre le gicleur et le balai peut toutefois être envisagée : patte en T destinée à coopérer avec une rainure en T, queue d'aronde, etc.

La patte 68 comprend deux branches sensiblement perpendiculaires, dont une est sensiblement parallèle à l'axe Y et dont l'autre est sensiblement perpendiculaire à cet axe Y.

La branche de la patte 68, parallèle à l'axe Y, comprend une extrémité longitudinale reliée ici au connecteur 24 du balai 12 et une extrémité longitudinale opposée qui est reliée à une extrémité inférieure de l'autre branche de la patte 68 qui s'étend donc vers le haut depuis la première branche. L'extrémité opposée de cette autre branche est reliée à un doigt 70 destiné à être engagé dans le logement 66 précité du gicleur 40.

La patte 68 est située au voisinage d'une extrémité longitudinale du connecteur 24. Le doigt 70 est sensiblement parallèle à l'axe longitudinal du balai ou du bras et s'étend du côté de l'extrémité opposée du connecteur 24. Le doigt 70 a de préférence une forme sensiblement complémentaire de celle du logement 66 du gicleur 40.

Le gicleur 40 selon l'invention peut être monté de la façon suivante représentée aux figures 3a à 3d. Avant la fixation du balai 12 au bras 14, le gicleur 40 est disposé sur le côté de la pièce terminale 28 comportant la tige 58 et l'orifice 56 du gicleur est aligné sur l'axe X de la tige 58 (figures 3a et 3b). Le gicleur 40 est ensuite déplacé en translation selon la flèche 60, vers la pièce terminale 28 du bras jusqu'à ce que la tige 58 soit engagée dans l'orifice 56 du gicleur. Le balai 12 peut ensuite être monté sur le bras, de façon connue, en engageant l'adaptateur 26 du balai dans la pièce terminale du bras par translation suivant la flèche 62, jusqu'à ce que notamment le bouton poussoir 27 de l'adaptateur s'engage dans l'ouverture 38 de la pièce terminale (figures 3c et 3d) et que le doigt 70 porté par la patte 66 reliée au connecteur 24 s'engage dans le logement 66 du gicleur.

En position de montage représenté en figure 3d, le gicleur 40 est à la fois relié, par la tige 58, au bras 14, et, par la patte 66 et son doigt 70, au balai 12. L'engagement du doigt 70 dans le logement 66 du gicleur 40 permet de rendre solidaire en rotation le gicleur du balai. Ainsi, lors d'un pivotement du balai autour de l'axe Y, le gicleur pivote autour de l'axe X, aligné sur l'axe Y, et suit les mouvements du balai (flèche 64).

La figure 5 représente une variante de réalisation de l'invention dans laquelle le gicleur n'est pas représenté car il est sensiblement identique à celui décrit dans ce qui précède.

Dans la variante représentée, les éléments déjà décrits dans ce qui précède sont désignés par les mêmes chiffres de référence.

La tige 58' du bras 14 est ici de forme sensiblement parallélépipédique et de forme allongée. Elle s'étend en direction transversale depuis la paroi latérale 32a de la pièce terminale 28, sensiblement depuis le milieu de cette paroi latérale. Une extrémité de la tige 58' est reliée à la paroi 32a et l'autre extrémité est libre.

La tige 58' est ici réalisée d'une seule pièce avec la pièce terminale 28. Pour cela, la paroi latérale 32a peut être découpée (découpe 76) et la partie découpée peut être pliée et rabattue pour s'étendre en direction transversale et former la tige 58'.

La tige 58' est configurée pour être engagée dans un alésage 56' d'un pion 72 de forme cylindrique allongée qui est lui-même configuré pour être engagé dans un orifice transversal du gicleur. L'orifice du gicleur pourra être similaire à celui 56 décrit dans ce qui précède avec éventuellement un diamètre plus important que celui de l'orifice 56.

L'alésage 56' du pion a une forme complémentaire de la tige 58' de sorte que le pion soit rendu solidaire, en particulier en rotation, vis-à-vis de la tige. Le pion 72 définit l'axe X précité de pivotement du gicleur, qui est de préférence parallèle à l'axe Y et plus préférentiellement alignée sur l'axe Y.

Comme cela est représenté par la flèche 74 en figure 5, le pion 72 est monté sur la tige 58' par translation en direction transversale. Les étapes décrites ci-dessus en référence aux figures 3a à 3d peuvent ensuite être effectuées pour monter le gicleur sur le bras et le balai sur le bras.

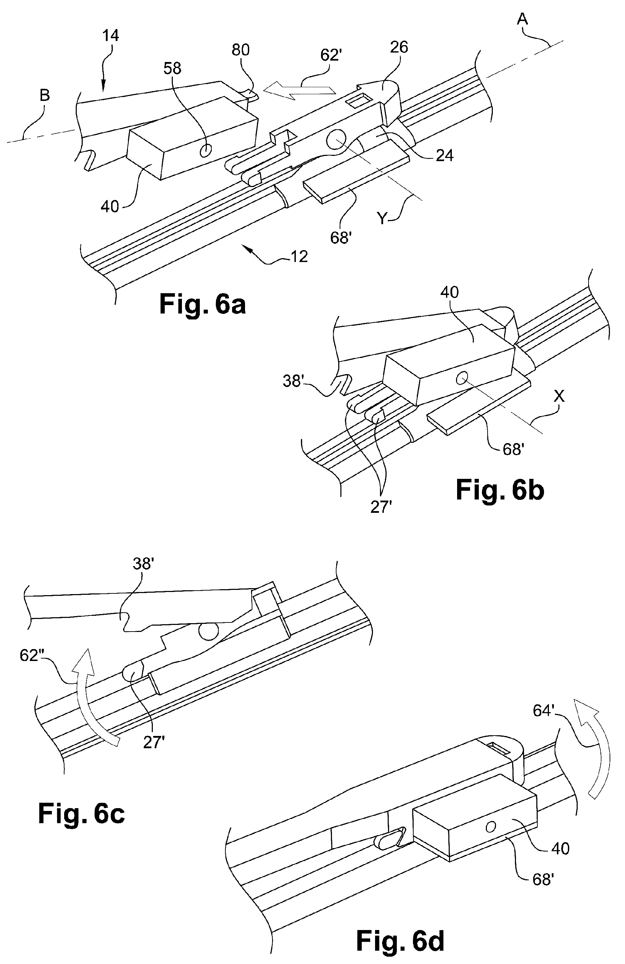

Les figures 6a à 6d représentent une autre variante de réalisation de l'invention dans lesquels les éléments déjà décrits dans ce qui précède sont désignés par les mêmes chiffres de référence.

Le gicleur 40 est sensiblement identique à celui décrit dans ce qui précède et est relié à un tuyau d'alimentation en liquide lave-glace bien que ce dernier ne soit pas représenté dans les dessins.

Les moyens précités du gicleur 40, qui sont destinés à coopérer avec le balai 12 afin de provoquer un pivotement du gicleur vis-à-vis du bras 14 en fonctionnement, sont ici formés par la partie inférieure du gicleur et plus exactement pas sa face inférieure. Le gicleur 40 est en appui par sa face inférieure sur une plaque 68' portée par le balai pour permettre ce pivotement.

La plaque 68' est sensiblement plane et s'étend dans un plan sensiblement parallèle aux axes Y et A (ou B). Elle s'étend sur un côté balai et est par exemple portée par le connecteur 24 du balai 12.

La plaque 68' peut avoir des dimensions telles qu'elle s'étend sur sensiblement toute l'étendue de la face inférieure du gicleur, comme cela est visible dans les dessins.

Le gicleur 40 est monté sur le bras 14 comme décrit dans ce qui précède en référence aux figures 3a et 3b.

Le balai 12 peut ensuite être monté sur le bras 14, d'une autre façon connue, en engageant l'adaptateur 26 du balai dans la pièce terminale du bras par translation suivant la flèche 62', jusqu'à ce qu'une languette avant 80 de la pièce terminale 28 du bras 14 s'engage dans un logement correspondant de l'adaptateur 26 (figures 6a et 6b).

Le balai 12 est ensuite déplacé vers le bras suivant la flèche 62", jusqu'à ce que des boutons poussoirs latéraux 27' de l'adaptateur s'engagent dans des encoches 38' de la pièce terminale 28 (figures 6c et 6d).

En position de montage représenté en figure 6d, le gicleur 40 est en appui sur la plaque 68' du balai et peut suivre les déplacements du balai autour de l'axe Y, par rotation autour de la tige 58 de la pièce terminale 28 du bras (flèche 64').

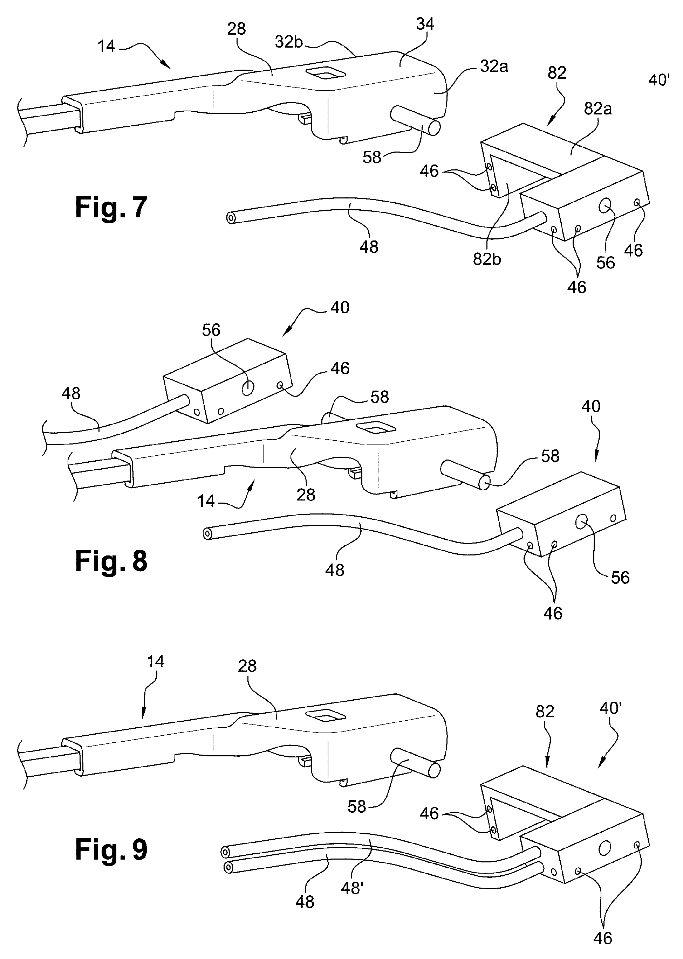

La figure 7 représente une variante de réalisation de l'invention dans laquelle le gicleur 40' comprend toutes les caractéristiques du gicleur 40 décrit en référence aux figures 3a à 4, et comprend en outre une patte 82 en L.

Cette patte 82 comprend une première paroi 82a plane qui s'étend sur un côté du gicleur et qui est sensiblement parallèle et alignée avec la face supérieure du gicleur. Cette première paroi 82a est destinée à s'étendre au-dessus de la pièce terminale 28 et à la coiffer. En variante, elle pourrait s'étendre au-dessous de la pièce 28 ou en avant de celle-ci.

La patte 82 comprend une seconde paroi 82b plane qui s'étend vers le bas depuis l'extrémité latérale libre de la première paroi 82a, opposée au corps du gicleur 40'. Les parois 82a, 82b sont sensiblement perpendiculaires et la paroi 82b peut s'étendre parallèlement à la paroi latérale 32b de la pièce terminale 28. La distance entre la paroi 82b et le corps du gicleur 40' est avantageusement suffisante pour permettre l'insertion de la tige 58 dans l'orifice 56 comme indiqué dans ce qui précède. Cette distance est de préférence au moins égale à la somme de la longueur de la tige 58 et de la largeur de la pièce terminale 28 (c'est-à-dire de la distance entre ses parois latérales 32a, 32b).

Comme cela est visible dans le dessin, la paroi 82b comprend avantageusement des orifices 46 de projection de liquide lave-glace. La patte 82 comprend au moins un canal interne de raccordement fluidique de ses orifices 46 aux conduits internes du corps du gicleur 40'.

On dispose ainsi de moyens de projection de fluide de chaque côté de la pièce terminale 28, de manière simultanée vers l'avant et vers l'arrière de l'essuie-glace, que ce soit dans le sens montant ou descendant de déplacement de l'essuie-glace.

Dans la variante représentée en figure 8, le bras 14 porte deux gicleurs 40 indépendants et sensiblement identiques, du type de celui représenté aux figures 3a à 4. Chaque gicleur 40 est alimenté de manière indépendante par un tuyau 48 qui lui est propre. Le bras 14 comprend alors dans ce cas deux tuyaux 48 d'alimentation des gicleurs. Les tiges 58 de pivotement des gicleurs 40 sont sensiblement coaxiales. Chaque gicleur 40 peut se déplacer en rotation vis-à-vis de la pièce terminale 28 du bras autour de son propre axe de rotation et indépendamment de l'autre gicleur.

L'avantage de cette variante est qu'elle permet, comme la variante de la figure 7, de projeter du liquide des deux côtés du balai en fonctionnement. Par contre, du fait que chaque gicleur est alimenté en liquide de façon indépendante, il est possible de projeter le liquide de façon alterné, toujours vers l'avant, c'est-à-dire d'un côté dans le sens montant de déplacement du balai et de l'autre côté dans le sens descendant de déplacement.

La figure 9 représente une variante de réalisation de l'invention dans laquelle le gicleur 40' diffère de celui de la figure 4 essentiellement en ce qu'il est relié à deux tuyaux 48, 48' et non pas un seul. Un premier tuyau 48 permet d'alimenter les orifices 46 du corps du gicleur 40' et le second tuyau 48' permet d'alimenter les orifices 46 de la patte 82. Cette technologie permet ainsi de bénéficier des avantages des deux variantes des figures 7 et 8, à savoir l'utilisation d'un seul gicleur (figure 7) et la projection alternée de liquide d'un côté ou de l'autre du balai en fonctionnement (figure 8).

## Revendications

1. Bras (14) d'entraînement d'un balai (12) d'essuie-glace (10) de véhicule, en particulier automobile, comportant une pièce terminale (28) de fixation au balai d'essuie-glace, le bras comportant en outre un gicleur (40, 40') de fluide, tel que d'un liquide lave-glace, **caractérisé en ce que** le gicleur est monté pivotant autour d'un axe de pivotement (58, 72) qui est directement fixé ou relié à ladite pièce terminale, et **en ce que** ledit gicleur comprend des moyens (66) configurés pour coopérer avec ledit balai pour provoquer un pivotement du gicleur autour dudit axe.

2. Bras (14) selon la revendication 1, dans lequel ledit axe de pivotement (50, 72) s'étend dans une direction sensiblement transversale par rapport à un axe longitudinal (A) ou d'allongement du bras ou de sa pièce terminale (28).

3. Bras (14) selon la revendication 1 ou 2, dans lequel ledit axe de pivotement (58, 72) est sensiblement parallèle à un axe d'articulation (Y) du balai (12) au bras.

4. Bras (14) selon la revendication 3, dans lequel ledit axe de pivotement (58, 72) est sensiblement aligné sur ledit axe d'articulation (Y) du balai (12) au bras.

5. Bras (14) selon l'une des revendications précédentes, dans lequel ledit axe de pivotement (58, 72) comprend une tige (58, 58') de forme allongée dont une extrémité longitudinale est fixée ou reliée à la pièce terminale (28).

6. Bras (14) selon la revendication 5, dans lequel ladite tige (58, 58') a une forme sensiblement cylindrique ou parallélépipédique.

7. Bras (14) selon la revendication 5 ou 6, lequel ladite tige (58, 58') est formée d'une seule pièce avec la pièce terminale (28).

8. Bras (14) selon la revendication 7, dans lequel ladite tige (58') est réalisée par découpe et pliage d'une paroi (32b) de ladite pièce terminale (28).

9. Bras (14) selon l'une des revendications 5 à 8, dans lequel un pion (72) sensiblement cylindrique est monté sur ladite tige (58'), ce pion comportant par exemple un alésage longitudinal (56') dans lequel est engagée la tige et qui a en section une forme sensiblement complémentaire de celle de la tige.

10. Bras (14) selon l'une des revendications 5 à 8, dans lequel le gicleur (40, 40') est monté directement sur la tige (58) ou sur le pion (72) monté sur la tige (58').

11. Bras (14) selon l'une des revendications précédentes, dans lequel lesdits moyens (66) sont configurés pour coopérer avec un élément (68, 70) dudit balai (12), tel qu'un connecteur (24), une vertèbre de rigidification, ou un corps longitudinal.

12. Essuie-glace (10) de véhicule, en particulier automobile, comportant un balai (12) d'essuie-glace et un bras (14) selon l'une des revendications précédentes, le balai comportant un corps longitudinal, une lame d'essuyage, au moins une vertèbre de rigidification, et un système de fixation et d'articulation du balai au bras, autour d'un axe transversal (Y), **caractérisé en ce que** lesdits moyens (66) du gicleur sont configurés pour coopérer avec le balai de sorte que le gicleur (40, 40') pivote autour dudit axe de pivotement (X) et suive les déplacements du balai en pivotement autour dudit axe transversal (Y).

13. Essuie-glace (10) selon la revendication 12, dans lequel lesdits moyens (66) coopèrent avec un élément (68, 70, 68') dudit balai, tel que ladite au moins une vertèbre de rigidification, ledit corps longitudinal, ou un connecteur (24) dudit système de fixation.

14. Essuie-glace (10) selon la revendication 13, dans lequel ledit élément du balai comprend une patte (68), par exemple de forme générale en L, dont une extrémité porte un doigt (70) configuré pour coopérer, par exemple par engagement, avec lesdits moyens (66) du gicleur.

15. Essuie-glace (10) selon la revendication 13, dans lequel ledit élément du balai comprend une plaque (68') d'appui du gicleur ou des moyens du gicleur.
